Europäisches Patentamt

European Patent Office

Office européen des brevets

(19)

(11) Veröffentlichungsnummer: **0 342 567**
**A2**

(12) **EUROPÄISCHE PATENTANMELDUNG**

(21) Anmeldenummer: 89108692.8

(51) Int. Cl.⁴: **B29C 43/30**

(22) Anmeldetag: 13.05.89

(30) Priorität: 18.05.88 DE 3816855

(43) Veröffentlichungstag der Anmeldung:
23.11.89 Patentblatt 89/47

(84) Benannte Vertragsstaaten:
AT BE CH DE ES FR GB IT LI NL SE

(71) Anmelder: RÖHM GMBH
Kirschenallee
D-6100 Darmstadt(DE)

(72) Erfinder: Vetter, Heinz, Dr. Ing
Taunusstrasse 92
D-6101 Rossdorf(DE)
Erfinder: Siol, Werner, Dr.
Goerdelerweg 34
D-6100 Darmstadt-Eberstadt(DE)

(54) Verfahren zur Herstellung kratzfest beschichteter Kunststoffbahnen.

(57) Eine kratzfest beschichtete extrudierte Kunststoffbahn wird erzeugt, indem ein zur Bildung einer
kratzfesten Beschichtung geeignetes Material auf die
formbildende Oberfläche des rücklaufenden Trums
wenigstens eines der Endlosbänder eines Doppelbandkalibrators aufgetragen und die extrudierte Bahn
in dem Doppelbandkalibrator geglättet und gekühlt
wird, wobei die Beschichtung auf die Oberfläche der
Bahn übertragen wird.

## Gebiet der Erfindung

Die Erfindung betrifft ein Verfahren zur Herstellung kratzfest beschichteter Kunststoffbahnen durch Formen einer thermoplastischen Formmasse mittels eines Doppelbandkalibrators zu einem bahnförmigen Strang, wobei die Bahn mit einem zur Bildung einer kratzfesten Oberfläche geeigneten Material beschichtet wird.

Stand der Technik

Die Herstellung kratzfest beschichteter extrudierter Kunststoffbahnen in einem Arbeitsgang ist nicht bekannt.

Dagegen ist es bekannt, nach dem Spritzgußverfahren hergestellte Formkörper aus Kunststoff nachträglich kratzfest zu beschichten, indem man sie in eine Lösung eines zur Bildung einer kratzfesten Schicht geeigneten Materials eintaucht, das Lösemittel verflüchtigt und die Schicht aushärtet. Bei dem zweiten in der DE-C 24 55 715 beschriebenen Verfahren wird dazu eine Lösung verwendet, die eine radikalisch polymerisierbare Verbindung mit wenigstens drei Acryl- oder Methacrylgruppen und einen radikalbildenden Initiator enthält. Durch die nachträgliche Beschichtung wird die Maßgenauigkeit des Formteils verändert. Weiterhin kann durch das in der Beschichtungslösung enthaltene Lösemittel Rißbildung in dem Kunststoffteil verursacht werden.

Gemäß DE-A 20 58 504 wird eine Glasplatte mit einem flüssigen, zu einem kratzfesten Beschichtungskunststoff härtbaren Gemisch beschichtet, eine Platte aus Kunststoff unter Vermeidung des Einschlusses von Luftblasen aufgelegt, die noch freie Oberfläche der Kunststoffplatte mit dem flüssigen Gemisch beschichtet, eine zweite Glasplatte aufgelegt, die Schichten des Gemisches gehärtet und die Glasplatten abgelöst. Dieses Verfahren eignet sich nicht zur kontinuierlichen Herstellung von kratzfest beschichteten Kunststoffbahnen.

Zur Herstellung beschichteter Spritzgußteile wird in der EP-A 123 374 vorgeschlagen, nach der Erzeugung eines Spritzgußteil das Formwerkzeug leicht zu öffnen, eine flüssige Masse zur Bildung einer Oberflächenschicht einzuspritzen und das Werkzeug wieder zu schließen. Die Masse wird durch Drehbewegungen der Formhälften während des Schließvorganges auf der Oberfläche des Formteils verteilt und härtet danach aus.

Bei einer Reihe weiterer bekannter Verfahren, die in der Kunststofftechnik als "In-Mold-Coating"-Verfahren bekannt sind, werden Formteile mit einer kratzfesten Oberflächenschicht dadurch erzeugt, daß man die formbildende Oberfläche eines Spritzgußwerkzeugs mit einer kratzfesten Schicht versieht und in die so vorbereitete Form eine härtbare Masse zur Bildung des inneren Formkörpers einbringt und aushärtet. So wird bei dem ersten Verfahren der DE-C 24 55 715 auf die innere Formwand eine Schicht eines Überzugsmaterials aufgetragen und unter einer sauerstofffreien Atmosphäre photochemisch gehärtet. Anschließend wird ein Monomeres, das für die Bildung des Formkörpers vorgesehen ist, z.B. ein Methacrylatsirup, in die Form gegeben und unter vorherbestimmten Bedingungen polymerisiert. Dabei verbindet sich die auf die Formwand aufgebrachte Schicht mit dem entstehenden Polymerisatkörper und kann nach der Polymerisation mit diesem aus der Form entnommen werden.

Bei einem sehr ähnlichen Verfahren gemäß DE-C 21 64 716 wird die auf die Forminnenwand aufgetragene Beschichtung mit einer Folie abgedeckt und mittels radikalischer Initiatoren gehärtet, wodurch die Anwendung eines sauerstofffreien Schutzgases entbehrlich wird. Nach der Aushärtung der Beschichtung wird die Folie abgezogen und ein Monomeres für den Kunstharzkern eingefüllt und polymerisiert. In entsprechender Weise wird bei den Verfahren gemäß DE-A 31 40 316 und 30 28 562 gearbeitet, wo nach Beschichtung der Formwände mit gefärbtem Material ein ungesättigtes Polyesterharz in den Formhohlraum eingespritzt und ausgehärtet wird.

Nach DE-A 32 03 540 werden Spritzgußteile mit kratzfester Oberfläche erzeugt, indem man in das Spritzgußwerkzeug einem kratzfest beschichteten Folienabschnitt einlegt und dann eine thermoplastische Formmasse einspritzt, die sich mit dem Folienabschnitt unter dem Formmassendruck verbindet.

Zur Herstellung von Spritzgußteilen mit einer oberflächlichen Farbschicht wird in DE-C 28 03 144 vorgeschlagen, auf die Innenseite eines Spritzgußwerkzeugs einen Lackfilm aufzutragen und zu härten. Danach wird das Werkzeug geschlossen und eine Formmasse eingespritzt.

Gemäß DE-A 24 48 477 wird die Innenseite eines heißen Formwerkzeugs elektostatisch mit einem thermoplastischen Pulverharz beschichtet, das dort zu einer Schicht zusammensintert. Anschließend wird eine treibmittelhaltige Formmasse eingespritzt. Man erhält einen Schaumstoff-Formkörper mit einer Oberflächenschicht aus dem thermoplastischen Material, das eine höhere Kratzfestigkeit als der Schaumstoffkörper hat.

Die erwähnten Verfahren eignen sich durchweg nur zur Herstellung von einzelnen Formkörpern nach dem Spritzgußverfahren oder zur Herstellung einzelner Kunststoffplatten, aber nicht zur Herstellung kontinuierlicher Kunststoffbahnen.

Zur Herstellung von ebenen Bahnen aus thermoplastischem Kunststoff mit niedriger Orientierung ist es aus der US 3 852 387 bekannt, den Kunststoff mittels einer Schlitzdüse im thermoplastischen Zustand zu einem bahnförmigen Strang zu extrudieren und den Strang in einen Doppelbandkalibrator einzuleiten, wo er zu einer gleichförmigen ebenen Bahn geglättet und unter die Erweichungstemperatur gekühlt wird. Der Doppelbandkalibrator enthält zwei in gleichbleibendem Abstand um wenigstens zwei Umlenkwalzen parallel und gleichsinnig umlaufende Endlosbänder sowie Kühleinrichtungen, die auf die Rückseite der umlaufenden Endlosbänder einwirken.

Aufgabe und Lösung

Die Erfinder haben sich die Aufgabe gestellt, kontinuierliche Bahnen aus Kunststoff mit kratzfester Oberfläche herzustellen.

Die Aufgabe wird erfindungsgemäß dadurch gelöst, daß bei einem Verfahren zur Herstellung kratzfest beschichteter Kunststofformkörper durch Beschichten der formbildenden Oberfläche eines Formwerkzeuges mit einem zur Bildung der kratzfesten Beschichtung geeigneten Material, Formen einer thermoplastischen Formmasse mittels des beschichteten Formwerkzeugs und Abkühlen unter die Erweichungstemperatur, als Formwerkzeug ein Doppelbandkalibrator, enthaltend zwei in gleichbleibendem Abstand um wenigstens zwei Umlenkwalzen parallel und gleichsinnig umlaufende Endlosbänder, verwendet und die Formmasse zu einer kontinuierlichen Kunststoffbahn geformt und unter die Erweichungstemperatur des thermoplastischen Kunststoffes gekühlt wird, wobei das zur Bildung der kratzfesten Beschichtung geeignete Material auf die Oberfläche des rücklaufenden Trums wenigstens einer der Endlosbänder des Doppelbandkalibrators aufgetragen wird. Im Eintrittspalt des Doppelbandkalibrators tritt die auf das Band aufgetragene und gegebenenfalls teilweise gehärtete Beschichtung mit dem thermoplastischen Kunststoffstrang in Berührung und verbindet sich mit diesem, so daß sie als kratzfeste Schicht mit der gekühlten Kunststoffbahn aus dem Doppelbandkalibrator austritt. *

(*) Der thermoplastische Kunststoffstrang wird in üblicher Weise durch Aufschmelzen eines geeigneten Kunststoffmaterials in einem Extruder und Extrusion der gebildeten Schmelze durch eine Schlitzdüse gebildet. Die Aushärtung des Kunststoffstranges erfolgt nach der Formung und Beschichtung durch Abkühlen unter die Erweichungstemperatur.)

Die **Figur** zeigt einen senkrechten Schnitt durch eine Vorrichtung zur Herstellung einer einseitig kratzfest beschichteten Kunststoffbahn gemäß dem Verfahren der Erfindung.

Gemäß einer bevorzugten Ausführungsform der Erfindung wird zur Bildung der kratzfesten Beschichtung 17 eine flüssige Mischung aus wenigstens einem radikalisch polymerisierbaren Monomeren mit mehr als einer polymerisierbaren Doppelbindung und wenigstens einem radikalbildenden Initiator, der bei Temperaturen zwischen der Temperatur der Oberfläche des Endlosbandes und der Temperatur der thermoplastischen Formmasse oder unter der Einwirkung von UV-Strahlung Radikale bildet, auf die formbildende Oberfläche wenigstens eines Endlosbandes aufgebracht. Die Polymerisation der Monomeren setzt entweder sofort oder nach Berührung mit der Formmasse ein und gelangt zum Abschluß, bevor die Kunststoffbahn unter die Erweichungstemperatur abgekühlt ist. Die Polymerisation ist als abgeschlossen anzusehen, wenn eine harte kratzfeste Schicht erhalten wird, auch wenn sich in dieser noch unumgesetzte Doppelbindungen nachweisen lassen.

Vorteile der Erfindung

Mit dem Verfahren der Erfindung können Kunststoffbahnen mit kratzfester Oberfläche kontinuierlich erzeugt werden. Zur Herstellung der Kunststoffbahnen können herkömmliche extrudierbare Formmassen ohne reaktive Gruppen eingesetzt werden. Zwischen dem Zeitpunkt, an dem das Material zur Bildung einer kratzfesten Schicht auf das Endlosband aufgetragen wird, und dem Zeitpunkt, an dem das beschichtete Endlosband mit dem thermoplastischen Strang in Berührung tritt, liegt eine in ziemlich weiten Grenzen wählbare Zeitspanne, in der die Beschichtung unter weitgehend wählbaren Bedingungen vorbehandelt, d.h. teilweise oder völlig gehärtet werden kann. Nach dem Einbringen des Stranges in den Doppelbandkalibrator besteht wiederum eine wählbare Zeitspanne für die thermische Aushärtung der Beschichtung. Daher kann das Verfahren in idealer Weise den bestmöglichen Verarbeitungsbedingungen der kratzfesten Beschichtung angepaßt werden. Es läßt sich gleichzeitig auf beiden Seiten der Bahn eine kratzfeste Beschichtung mit hervorragender Oberflächenqualität erzeugen.

Anwendung der Erfindung

Das Verfahren der Erfindung eignet sich zur Herstellung von endlos extrudierten, d.h.kontinuierlichen Kunststoffbahnen mit einseitig oder beidseitig kratzfester Oberfläche. Die Breite der Bahn ist nur durch die Breite der verfügbaren Extrusions-Schlitzdüse und des Doppelbandkalibrators begrenzt. Naturgemäß hat die Erfindung für die Herstellung von Bahnen mit hochglänzender Oberfläche, insbesondere aus glasklarem Kunststoff, die größte Bedeutung.

Geeignete spritzbare Kunststofformmassen sind z.B. Polyäthylen, Polypropylen, Polystyrol, Polyvinyl chlorid, und thermoplastische Polyester. Bevorzugt sind Polycarbonate, wie Bisphenol-A-polycarboanat, und insbesondere Acrylglas, worunter Homo- und Copolymerisate des Methylmethacrylats (mit einem MMA-Anteil >80%) verstanden werden. *)

(*) Die Formmasse soll weniger als 0,5 Gew.-% an flüchtigen Bestandteilen enthalten; darunter werden Stoffe mit einem Siedepunkt (bei Normaldruck) unterhalb der Verarbeitungstemperatur der Formmasse verstanden, wie z.B. restliche Monomere.)

Ausführung der Erfindung

Die Erfindung beruht auf der übertragung der sog. "In-Mold-Coating"-Technik auf die Herstellung von extrudierten Kunststoffbahnen durch Extrusion einer thermoplastischen Formmasse durch eine Schlitzdüse 1 zu einer flachen Bahn 2 von beispielsweise 0,05 bis 20 mm Dicke und einer Breite zwischen 20 und 300 cm und anschließende Glättung der Bahn in einem Doppelbandkalibrator 3, in welchem die Bahn zwischen den parallel laufenden Trumen 4,5 zweier Endlosbänder, vorzugsweise aus hochglanzpoliertem Stahl, läuft und dabei geglättet und gekühlt wird. Zwischen den Umlenkwalzen 13 und 14 bzw. 15 und 16 laufen die Trume 4,5 in Extrusionsrichtung, während der obere Trum 6 von der Umlenkwalze 14 zur Walze 13 zurückläuft.

Zur erfindungsgemäßen Beschichtung der Oberfläche des rücklaufenden Trums 6 eines Endlosbandes kann jedes Material verwendet werden, das sich in Form einer Schmelze, einer Lösung oder eines flüssigen härtbaren Harzes auf der Bandoberfläche zu einer geschlossenen Schicht verteilen läßt, sich bei Berührung haftend mit der thermoplastischen Formmasse verbindet und beim Abkühlen unter die Erweichungstemperatur der Formmasse zu einer Oberflächenschicht von ausreichender Kratzfestigkeit erhärtet. Als kratzfest im Sinne der Erfindung gelten Beschichtungen, die härter als die Formmasse sind, aus der die Kunststoffbahn gebildet ist. Die Härte der Beschichtung kann durch Auswahl entsprechender bekannter Beschichtungsmittel den jeweiligen Anforderungen angepaßt werden. Bei Verwendung von UV-Initiatoren wird ein für UV-Strahlung hinreichend durchlässiges Material eingesetzt.

In jedem Falle enthält das zur Bildung einer kratzfesten Beschichtung geeignete Material ein organisches Polymer oder Vorkondensate bzw. Bildungkomponenten für ein solches Polymer. Die Haftung kann gegebenenfalls durch Reaktion von reaktiven Gruppen der Beschichtung mit coreaktiven Gruppen in der Formmasse verstärkt werden, jedoch sind solche Gruppen keine Voraussetzung für das Verfahren der Erfindung. Das zur Bildung der kratzfesten Beschichtung geeignete Material kann seine Härte allein durch Trocknen einer Lösung des Materials oder durch Erstarren einer Schmelze erlangen.

Vorzugsweise findet in der Zeitspanne vom Auftragen der Beschichtung auf die Bandoberfläche bis zum Abkühlen der geglätteten Bahn unter die Erweichungstemperatur der thermoplastischen Formmasse eine Härtungsreaktion unter Bildung von Vernetzungsbrücken innerhalb der Beschichtung statt. Die Vernetzung kann z.B. durch Umsetzung von Hydroxyl- oder Aminogruppen des Polymerisats oder Vorkondensats mit coreaktiven Gruppen eines mehrfunktionellen Vernetzungsmittels, wie Amidmethylolgruppen, Isocyanatgruppen oder Oxirangruppen, eintreten. Harzsysteme dieser Art sind in großer Zahl bekannt; z.B. Phenol-Formaldehyd-Harze, Harnstoff-Formaldehyd-Harze, Melamin-Formaldehyd-Harze, Epoxid-Harze oder Isocyanat-Harze.

Vorzugsweise wird als zur Bildung einer kratzfesten Beschichtung geeignetes Material eine flüssige Mischung aus wenigstens einem radikalisch polymerisierbaren Monomeren mit mehr als einer polymerisierbaren Doppelbindung und wenigstens einem radikalbildenden Initiator, der bei Temperaturen zwischen der Temperatur des Bandoberfläche und der Temperatur der thermoplastischen Formmasse oder unter der Einwirkung von UV-Strahlung Radikale bildet, auf die Bandoberfläche aufgebracht.

Die Monomeren zur Bildung der kratzfesten Schicht haben wenigstens zwei und selten mehr als sechs polymerisierbaren Doppelbindungen. Diese können in Acryloyl-, Methacryloyl-, Vinyl-, Allyl- oder Methallylresten vorliegen. Bevorzugt sind Ester der Acryl-oder Methacrylsäure mit mehrwertigen alphatischen Alkoholen. Diese enthalten in der Regel 2 bis 10 Kohlenstoffatome und 2 bis 6 Hydroxylgruppen, die alle oder zum Teil verestert sein können. Beispiele solcher Monomerer sind Äthylenglykol-diacrylat und -dimethacrylat, 1,2-Propylenglykol-diacrylat und -dimethacrylat, 1,2- bzw. 1,4-Butylenglykol-diacrylat und -dimethacrylat, Glycerin-triacrylat und -trimethacrylat, Pentaerythrit-tri- und -tetra-acrylat und -methacrylat, Trimethylolpropan-triacrylat und -trimethacrylat sowie die Acrylester von Dipentaerythrit. Da unter den erwähnten Estern die der Acrylsäure schneller und vollständiger polymerisieren als die der Methacrylsäure, werden mit besonderem Vorteil allein die Acrylester oder allenfalls Gemische von Acryl- und Methacrylestern verwendet, worin die ersteren deutlich überwiegen und die letzteren höchstens 30, bevorzugt nicht mehr als 15 Gew.-%, ausmachen. Monomere mit Siedepunkten über 140 Grad C sind bevorzugt.

Unter den mehrfunktionellen Monomeren führen diejenigen mit drei oder mehr Kohlenstoff-Doppelbindungen zu einer besonders hohen Vernetzungsdichte und entsprechend guter Kratzfestigkeit. Wegen ihrer meist hohen Viskosität sind sie jedoch in reiner Form bei Raumtemperatur schwer verarbeitbar. Die Viskosität kann durch einen Anteil an difunktionellen Monomeren vermindert werden. Dasselbe läßt sich durch den Zusatz monofunktioneller Monomerer erreichen, die zwar nicht zur Vernetzung beitragen, aber zu einer erhöhten Flexibilität der kratzfesten Schicht führen. Als monofunktionelle Monomere sind beispielsweise Styrol, Acrylnitril, Methacrylnitril, Monoalkylester der Acryl- und Methacrylsäure mit 1 bis 10 C-Atomen im Alkylrest oder mit substituierten Alkylresten, die beispielsweise Alkoxy- oder Hydroxylgruppen als Substituenten tragen können, zu nennen.

Der Anteil der mono- und bifunktionellen Monomeren kann im Interesse einer günstigen Verarbeitungsviskosität und einer hohen Flexibilität der kratzfesten Beschichtung bis auf 70 Gew.-% der Monomermischung gesteigert werden, während der Anteil der drei- oder mehrfunktionellen Monomeren im Interesse einer hohen Kratzfestigkeit nicht unter 30 Gew.-% liegen sollte. Überraschenderweise kann das Monomerengemisch ohne Beeinträchtigung der Kratzfestigkeit bis zu 30 Gew.-% Acrylsäure oder Methacrylsäure enthalten. Die Viskosität des flüssigen Monomerengemisches liegt mit Vorteil nicht über 100 mPa s (gemessen bei 20 Grad C).

Neben oder anstelle der mono- oder difunktionellen Monomeren können zur Einstellung einer günstigen Verarbeitungsviskosität nicht polymerisierbare, flüssige, flüchtige organische Lösemittel verwendet werden. Sie müssen aus der auf die Bandoberfläche aufgetragenen Schicht vor der Berührung mit der thermoplastischen Formmasse weitgehend oder vollständig verdampfen. Der nicht verdampfte Rest verflüchtigt sich allmählich nach dem Austritt der Bahn aus dem Doppelbandkalibrator.

Das Lösemittel muß, damit es verdampfen kann, einen Siedepunkt unter demjenigen der verwendeten Monomeren haben. Geeignete organische Lösemittel sind z.B. aliphatische Ester, Äther, Ketone, Chlorkohlenwasserstoffe und aromatische Kohlenwasserstoffe. Unter den Ketonen, die allgemein bevorzugt werden, ist Cyclohexanon besonders hervorzuheben. Es ist vorteilhaft, wenn das beschichtete Band auf einer hinreichend langen Strecke vor dem Eintrittspunkt des thermoplastischen Stranges in den Doppelbandkalibrator auf einer Temperatur oberhalb des Siedepunktes des Lösemittels gehalten wird.

Der radikalbildende Initiator hat die Aufgabe, die auf die Bandoberfläche aufgetragene Schicht der Monomerenmischung durch Polymerisation zu härten. Die Härtung kann abgeschlossen sein, bevor die beschichtete Bandoberfläche mit der thermoplastischen Formmassenbahn in Berührung tritt. In diesem Falle kann die gehärtete Schicht von der Formmasse nicht verdrängt werden. Andererseits ist die Haftung zwischen der Schicht und der abgekühlten Formmasse nicht immer voll zufriedenstellend. Eine bessere Haftung wird erzielt, wenn die Polymerisation der Schicht erst in Berührung mit der Formmasse abgeschlossen wird. Wenn die Polymerisation bis zur Berührung mit der Formmasse noch nicht weit genug fortgeschritten ist, besteht die Gefahr, daß die Schicht teilweise von der Bandoberfläche verdrängt wird. Der Ort, an dem das Material zur Bildung einer kratzfesten Beschichtung auf den rücklaufenden Trum des Endlosbandes aufgetragen wird, sollte in Abstimmung mit der Umlaufgeschwindigkeit der Endlosbänder so gewählt werden, daß die Zeitspanne zwischen dem Aufbringen der Monomermischung auf die Bandoberfläche und der Berührung mit der thermoplastischen Formmasse zu einer teilweisen Polymerisation ausreicht, bei der die Verdrängung der Schicht vermieden, aber eine ausreichende Haftung erreicht wird.

Bei Zutritt von Luftsauerstoff zu der polymerisierenden Schicht 7 auf der Bandoberfläche wird die Polymerisation an der freiliegenden Oberfläche der Schicht stärker als an der Berührungsfläche mit der Bandoberfläche gehemmt. Dadurch wird die an der Bandoberfläche anliegende Seite der Beschichtung mehr oder weniger vollständig ausgehärtet, während die andere Seite solange im teilpolymerisierten Zustand verbleibt, bis durch Berührung mit der Formmasse der Luftzutritt verwehrt und die Polymerisation unter Ausbildung einer guten Haftung abgeschlossen wird. Falls trotz dieser erwünschten Inhibierungswirkung des Luftsauerstoffs eine vollständige Aushärtung der Schicht vor der Berührung mit der Formmasse erwünscht ist, so ist es ratsam, ein Inertgas auf die beschichtete Bandoberfläche zu blasen.

Für das Verfahren der Erfindung sind radikalbildende Initiatoren mit einer Halbwertzeit < 2 min bei 100 Grad C besonders geeignet; vgl. Ullmanns Enzyklopädie der technischen Chemie, 3. Aufl., 1970, Ergänzungsband, S. 177-181. Besonders geeignet sind aliphatische Peroxydicarbonate; dazu gehören:

Diäthyl-peroxydicarbonat
Di-chloräthyl-peroxydicarbonat
Diisopropyl-peroxydicarbonat
Diisobutyl-peroxydicarbonat
Di-2-äthylhexyl-peroxydicarbonat
Dicyclohexyl-peroxydicarbonat
Di-(alkyl-cyclohexyl)-peroxydicarbonat
Di-(methyl-cyclohexyl)-peroxydicarbonat
Di-tert butylcyclohexyl-peroxydicarbonat
Siehe dazu Swern, Organic Peroxides, John Wiley & Sons, Vol. 1, 1970, S. 68-73 und Vol. 2, 1971, S. 863-867. Als UV-Initiatoren können beispielsweise Benzophenon, Benzoinäther, halogenierte Ketone, wie Trichloracetophenon, Benzildialkylketale, Thioxanthonderivate, Hydroxyalkylphenone oder Diäthoxyacetophenon verwendet werden.

Die Initiatoren, wie die oben genannten Peroxydicarbonate, werden in Mengen von 0,1 bis 10 Gew.-%, insbesondere von 1 bis 7 Gew.-%, bezogen auf das Gesamtgewicht der Monomermischung, eingesetzt. Neben Initiatoren mit einer Halbwertzeit < 2 min können solche mit > 2 min bei 100 Grad C in geringerer Menge, z.B. bis zu einem Fünftel der erstgenannten, mitverwendet werden. Als Beispiele seien Dilauroylperoxid, tert.-Butylperpivalat oder Dibenzoylperoxid genannt.

Der flüssigen Monomermischung können gewünschtenfalls weitere Zusätze beigemischt werden, beispielsweise Verlaufshilfsmittel, Antioxydantien, Antistatika oder UV-Schutzmittel. Verwendbar sind übliche, nicht polymerisierbare UV-Absorber, wie sie in Ullmanns Enzyklopädie der technischen Chemie, 4. Aufl., Band 15, Seiten 253-260, aufgeführt sind. Vorteilhafter sind jedoch polymerisierbare UV-Absorber, wie 3-(2-Benzotriazolyl)-2-hydroxy-5-tert.-octylbenzylmethacrylamid.

Das zur Bildung der kratzfesten Beschichtung geeignete Material, beispielsweise die aus Monomeren und Initiatoren sowie gegebenenfalls aus organischen Lösemitteln und weiteren Zusätzen bestehende Monomerenmischung, wird in einer Schichtdicke zwischen 1 und 100 Mikrometer, vorzugsweise 2 bis 50 Mikrometer auf die Oberfläche des rücklaufenden Trums 6 des Endlosbandes aufgetragen. Die Kratzfestigkeit würde durch geringere Schichtdicken nicht gewährleistet und durch höhere Schichtdicken nicht weiter verbessert, sondern allenfalls die Elastizität und Haftfestigkeit der Schicht vermindert. Die Endlosbänder können mittels Auftragswalzen, durch Aufrakeln, Gießen oder vorzugsweise durch Aufsprühen beschichtet werden. Die Temperatur des Beschichtungsmittels wird möglichst vom Vorratsbehälter bis zur Auftragsvorrichtung in einem Bereich gehalten, in dem noch keine merkliche Härtung einsetzt.

Je nachdem ob die Kunststoffbahn nur auf einer oder auf beiden Seiten kratzfest beschichtet werden soll, wird die Beschichtung entweder nur auf eines oder auf beide Endlosbänder aufgetragen.

Der beschichtete Abschnitt des rücklaufenden Trums des Endlosbandes wird zur teilweisen oder völligen Aushärtung der Beschichtung in der Regel auf eine Temperatur zwischen 20 und 180 Grad C eingestellt. Dies kann z.B. durch eine auf die Rückseite des Bandes einwirkende Heizplatte 8 oder durch eine auf die Oberfläche gerichtete Wärmestrahlung 9 bewirkt werden.

Die Polymerisation kann - insbesondere bei Ausschluß von Luftsauerstoff - innerhalb von 5 bis 600 Sekunden abgeschlossen sein. Die bevorzugte Zeitspanne zwischen dem Aufbringen der Schicht und dem Einbringen des Formmassestranges beträgt 10 bis 200 sec.
Sobald die Schicht im gewünschten Maße gehärtet ist, kann sie mit der Kunststoffbahn im schmelzflüssigen oder thermoelastischen Zustand in Berührung gebracht werden. Die endgültige Aushärtung erfolgt in der Zeit bis zur Abkühlung unter die Erweichungstemperatur.

Die Güte der kratzfesten Schicht auf dem fertigen Formteil hängt von der Zusammensetzung der verwendeten Monomerenmischung ab, insbesondere von der Vernetzungsdichte, der Elastizität und der Haftung an der darunterliegenden Formmasse. Bei zweckmäßiger Wahl der Zusammensetzung wird eine gleichwertige oder höhere Kratzfestigkeit wie mit hochwertigen Kratzfestbeschichtungen auf Polysiloxanbasis erreicht. Die besten erfindungsgemäß herstellbaren Beschichtungen werden durch Stahlwolle 00 selbst beim starken Reiben nicht zerkratzt.

BEISPIELE

In den nachfolgenden Beispielen werden folgende Ausgangsstoffe eingesetzt.
(A) Pentaerythrit-tetraacrylat
(B) Hexandiol-1,6-diacrylat
(C) Bis-4-tert-butylcyclohexyl-peroxydicarbonat
(D) Trimethylolpropantrisacrylat
(E) Cyclohexanon

Beispiel 1

9,43 g eines Gemisches aus 56 Gew.-% (A) und 44 Gew.-% (B) wurden mit 1,6g Initiatorlösung im Becherglas angerührt. Die Initiatorlösung bestand aus 10,5 g Methylethylketon als Lösungsmittel, in dem 1,6 g (C) als Initiator gelöst war. Die Lösung wurde in den Becher 10 eines Spritzapparats 11 gegeben und kontinuierlich mittels Stickstoff als Trägergas bei 4 - 5 bar Spritzdruck in einem Abstand von 100 cm vor der ersten Umlenkwalze eines Doppelbandkalibrators auf die Oberfläche des rücklaufenden Trums des oberen Endlosbandes aufgesprüht. Das Band hatte an der Auftragungsstelle eine Oberflächentemperatur von 70°C und eine Laufgeschwindigkeit von 1,5 cm/sec, so daß bis zum Eintritt der Beschichtung in den Doppelbandspalt 130 sec. vergingen. Im Bereich zwischen der Auftragungsstelle und der Umlenkwalze wurde das Band nicht zusätzlich erwärmt. Die Temperatur der Umlenkwalze 13 betrug 200 Grad C.

Im Eintrittspalt 12 des Doppelbandkalibrators trat die beschichtete Bandoberfläche mit einer 3 mm dicken Bahn aus PMMA-Formmasse (PLEXIGLAS Y8N, glasklar), die eine Oberflächentemperatur von 230 Grad C hatte, in Kontakt. Das Stahlband und damit die Kunststoffbahn wird anschließend über zwei je 600 mm lange Kontaktkühlflächen 13 und 14 so gekühlt, daß die Temperatur der Kunststoffbahn nach dem Austritt aus dem Kalibrator 80 Grad C betrug. Die Temperatur der beiden Kontaktkühlflächen betrug 40 Grad C.

Beispiel 2

5,54 g einer Monomermischung, bestehend aus 21 Gew.-% (A) und 79 Gew.-% (D) wurden mit 2 Gew.-% Initiatorlösung versetzt. Die Initiatorlösung enthielt 6,6 g (E), worin 16 Gew.-% (C) gelöst waren.
Die weitere Verarbeitung erfolgte wie im Beispiel 1.

Beispiel 3

8 g Monomermischung, bestehend aus 56 Gew.-% (A) und 44 Gew.-% (B), wurden mit 16 Gew.-% Initiatorlösung versetzt. Die Initiatorlösung bestand aus 23,4 g (E) mit 9 Gew. Initiator (B). Das Auftragen der Sprühlösung erfolgte wie im Beispiel 1. Die Oberflächentemperatur der Bandes betrug 100 Grad C.
Im Eintrittspalt wurde die Beschichtung mit einer 2 mm dicken Bahn aus einer Polykarbonat-Formmasse (Makrolon 2800) in Kontakt gebracht. Die erhaltenen Kunststoffbahn besaß eine 10 μm dicke kratzfeste Schicht.

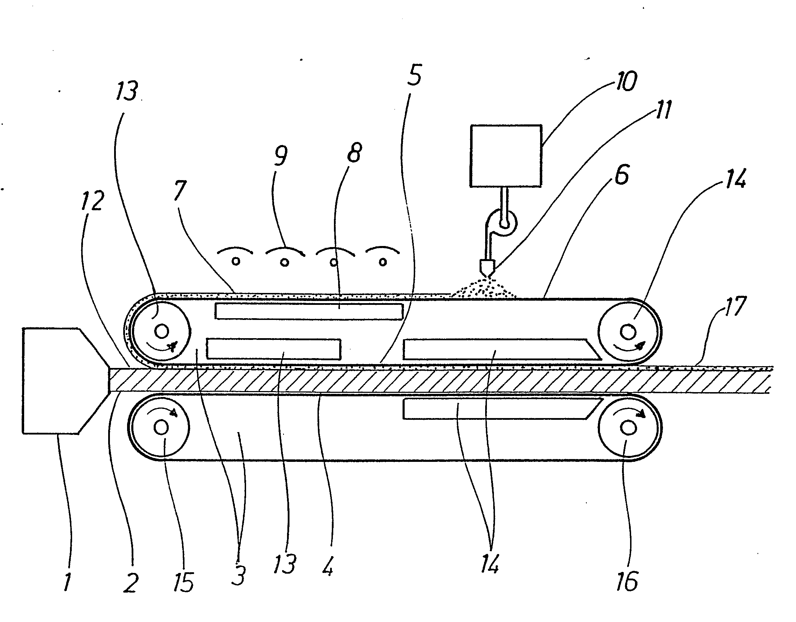

**Ansprüche**

1. Verfahren zur Herstellung kratzfest beschichteter Kunststofformkörper durch Beschichten der formbildenden Oberfläche eines Formwerkzeuges mit einem zur Bildung der kratzfesten Beschichtung geeigneten Material, Formen einer thermoplastischen Formmasse mittels des beschichteten Formwerkzeugs und Abkühlen unter die Erweichungstemperatur,
dadurch gekennzeichnet,
daß als Formwerkzeug ein Doppelbandkalibrator, enthaltend zwei in gleichbleibendem Abstand um wenigstens zwei Umlenkwalzen parallel und gleichsinnig umlaufende Endlosbänder, verwendet und die Formmasse in dem Doppelbandkalibrator zu einer kontinuierlichen Kunststoffbahn geformt wird, wobei das zur Bildung der kratzfesten Beschichtung geeignete Material auf die formbildende Oberfläche des rücklaufenden Trums wenigstens eines der Endlosbänder aufgetragen wird.

2. Verfahren nach Anspruch 1, dadurch gekennzeichnet, daß als zur Bildung einer kratzfesten Beschichtung geeignetes Material eine flüssige Mischung aus wenigstens einem radikalisch polymerisierbaren Monomeren mit mehr als einer polymerisierbaren Doppelbindung und wenigstens einem radikalbildenden Initiator, der bei Temperaturen zwischen der Temperatur der Oberfläche des Endlosbandes und der Temperatur der thermoplastischen Formmasse oder unter der Einwirkung von UV-Strahlung Radikale bildet, auf die Oberfläche eines der Endlosbänder aufgebracht wird.

3. Verfahren nach Anspruch 2, dadurch gekennzeichnet, daß die thermoplastische Formmasse mit der beschichteten Oberfläche des Endlosbandes in Berührung gebracht wird, wenn die Monomeren in der aufgetragenen Schicht teilweise polymerisiert sind.

4. Verfahren nach den Ansprüchen 2 oder 3, dadurch gekennzeichnet, daß die Mischung zur Bildung der kratzfesten Beschichtung auf die Oberfläche des Endlosbandes aufgetragen wird, wenn dieses eine Temperatur zwischen 20 und 150 Grad C hat.

5. Verfahren nach den Ansprüchen 1 bis 4, dadurch gekennzeichnet, daß eine Mischung zur Bildung der kratzfesten Beschichtung aufgebracht wird, die ein flüchtiges organisches Lösemittel enthält.

6. Verfahren nach Anspruch 5, dadurch gekennzeichnet, daß ein Lösemittel verwendet wird, dessen Siedepunkt unterhalb des Siedepunktes des Monomeren bzw. des Monomerengemisches liegt.

7. Verfahren nach Anspruch 6, dadurch gekennzeichnet, daß ein von radikalisch polymerisierbaren Kohlenstoff-Doppelbindungen freies organisches Lösemittel eingesetzt wird.

8. Verfahren nach den Ansprüchen 5 bis 7, dadurch gekennzeichnet, daß die lösemittelhaltige Mischung auf die Oberfläche des Endlosbandes aufgetragen und diese nach weitgehender Verflüchtigung des Lösemittels mit der thermoplastischen Formmasse in Berührung gebracht wird.

9. Verfahren nach den Ansprüchen 2 bis 8, dadurch gekennzeichnet, daß als Monomer mit mehr als einer polymersierbaren Doppelbindung eine Verbindung mit mehr als einer Acryloylgruppe eingesetzt wird.

10. Verfahren nach Anspruch 9, dadurch gekennzeichnet, daß zur Bildung der kratzfesten Beschichtung eine Mischung eingesetzt wird, in der wenigstens 70 Mol-% der polymerisierbaren Doppelbindungen in Acryloylresten enthalten sind.

11. Verfahren nach den Ansprüchen 9 oder 10, dadurch gekennzeichnet, daß wenigstens ein Teil der eingesetzten Acrylverbindungen wenigstens drei Acryloylgruppen enthält.

12. Verfahren nach den Ansprüchen 2 bis 11, dadurch gekennzeichnet, daß polymerisierbare Monomere mit einem Siedepunkt über 140 Grad C eingesetzt werden.

13. Verfahren nach den Ansprüchen 2 bis 12, dadurch gekennzeichnet, daß ein radikalbildender Initiator mit einer Halbwertzeit unter 2 min bei 100 Grad C eingesetzt wird.

14. Verfahren nach Anspruch 13, dadurch gekennzeichnet, daß als Initiator ein aliphatisches Peroxydicarbonat eingesetzt wird.

15. Verfahren nach den Ansprüchen 1 bis 14, dadurch gekennzeichnet, daß die thermoplastische Formmasse mit einer Temperatur zwischen 200 und 350 Grad C mit dem beschichteten Endlosband in Berührung gebracht wird.

16. Verfahren nach den Ansprüchen 3 bis 15, dadurch gekennzeichnet, daß die auf die Oberfläche des Endlosbandes aufgebrachte Schicht aus radikalisch polymerisierbaren Monomeren während der teilweisen Polymerisation der Einwirkung von Luftsauerstoff ausgesetzt wird.

17. Verfahren nach den Ansprüchen 2 - 15, dadurch gekennzeichnet, daß die thermoplastische Formmasse 10 bis 200 sec nach dem Aufbringen der polymerisierbaren Monomeren auf die Oberfläche des Endlosbandes mit diesem in Berührung gebracht wird.

EP 0 342 567 A2